(19) Europäisches Patentamt
European Patent Office
Office européen des brevets

(11) **EP 2 918 352 B1**

(12) **EUROPEAN PATENT SPECIFICATION**

(45) Date of publication and mention
of the grant of the patent:
**06.12.2017 Bulletin 2017/49**

(51) Int Cl.:
**B09B 3/00** *(2006.01)* **C01B 33/18** *(2006.01)*
**C22B 13/02** *(2006.01)* **C03C 23/00** *(2006.01)*

(21) Application number: **13853917.6**

(86) International application number:
**PCT/JP2013/079013**

(22) Date of filing: **25.10.2013**

(87) International publication number:
**WO 2014/073399 (15.05.2014 Gazette 2014/20)**

(54) **METHOD FOR SEPARATING HEAVY METALS FROM GLASS**

VERFAHREN ZUR ABTRENNUNG VON SCHWERMETALLEN AUS GLAS

PROCÉDÉ DE SÉPARATION DE MÉTAUX LOURDS D'UN VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2012 JP 2012248553**

(43) Date of publication of application:
**16.09.2015 Bulletin 2015/38**

(73) Proprietor: **Tottori Prefecture
Tottori 680-8570 (JP)**

(72) Inventors:
• **MONGI, Hideyuki**
**Tohaku-gun**
**Tottori 682-0704 (JP)**
• **NARUOKA, Tomohiro**
**Tohaku-gun**
**Tottori 682-0704 (JP)**
• **IGURA, Takeshi**
**Tottori-shi**
**Tottori 680-8570 (JP)**
• **YOSHIOKA, Toshiaki**
**Sendai-shi**
**Miyagi 980-8577 (JP)**
• **FUJIMORI, Takashi**
**Kyoto-shi**
**Kyoto 606-8501 (JP)**

(74) Representative: **Gulde & Partner
Patent- und Rechtsanwaltskanzlei mbB
Wallstraße 58/59
10179 Berlin (DE)**

(56) References cited:
**JP-A- H10 202 221    JP-A- 2000 282 155
JP-A- 2000 282 155    JP-A- 2004 306 012
JP-A- 2004 306 012    JP-A- 2007 308 310
JP-A- 2012 239 945**

• **TAKASHI NAKAMURA ET AL.: 'Present Status
and Problems on Recycling CRT Glasses'
CERAMICS vol. 47, no. 2, 01 February 2012, pages
86 - 89, XP008176547**

EP 2 918 352 B1

**Description**

**TECHNICAL FIELD**

The present invention relates to a method for separating heavy metals from glass. In one example, the present invention is utilized in separating lead from lead-glass used in the funnel of a cathode ray tube (hereinafter referred to as CRT).

**BACKGROUND ART**

Glass used in the funnel of a CRT (funnel glass) contains lead at a high concentration. Conventionally, when the CRT is discarded, the funnel glass is recycled as a funnel glass for a new CRT. However, in recent years, flat-screen television has become popular, leading to decrease in the manufacture of CRTs. Therefore, it has become difficult to utilize the funnel glass as a funnel glass for new CRTs, and thus a new method for discarding the funnel glass is in need.

As described, since the funnel glass contains lead at a high concentration, it cannot be disposed by landfill as it is. In addition, it is not easy to utilize the funnel glass as a construction material and the like. Accordingly, a technique to remove lead from the funnel glass is desired.

As a technique to remove lead from the funnel glass, Patent Document 1 discloses a technique which melts lead-glass and a reducing agent, thereby reducing the lead oxide to allow collection of the lead as a metallic lead (melting reduction process).

As another technique to remove lead from the funnel glass, Patent Document 2 discloses a phase-separation method. In this method, the waste glass is melted with boron oxide, thereby forming a glass with a split phase of silicon oxide phase and boron oxide phase. This allows condensation of impurities such as chromium and cobalt into the boron oxide phase. The impurities can be removed from the waste glass by leaching (extracting) the boron oxide phase with acid.

As another technique, non-Patent Document 1 discloses a method in which a lead-glass is subjected to a reduction melting treatment, separating the lead contained by approximately 20% as a metal lead, thereby reducing the lead concentration of the glass to <1 mass%. Subsequently, a chlorinating agent ($CaCl_2$) and a reducing agent (C) are added to the glass, and then the glass is melt under reduced atmosphere to volatize and separate the residual Pb as $PbCl_2$. Accordingly, more than 99% of Pb can be removed.

**PRIOR ART REFERENCE**

**PATENT DOCUMENT**

Patent Document 1: JP-A-7-96264
Patent Document 2: WO2003/024879

**NON-PATENT DOCUMENT**

Non-Patent Document 1: Environmental Issue and Recycling Technology of Glass Lead Recovery from Waste CRT Glass by Reduction Melting/Chloride Volatilization Hybrid Method (Ceramics Japan : Bulletin of the Ceramic Society of Japan 47(2), 96-100, 2012-02)

**SUMMARY OF THE INVENTION**

**PROBLEMS TO BE SOLVED BY THE INVENTION**

The method described in Patent Document 1 is advantageous in that metallic lead with extra value can be collected, however, the glass after the collection of metallic lead contains residual lead at the level of several thousand mg/kg. Therefore, the glass still cannot be disposed by landfill.

The method described in Patent Document 2 is advantageous in that the impurities can be removed efficiently, however, this method requires the use of abundant acid. Therefore, the size of the plant for extraction becomes large, and thus the cost for treating waste glass increases.

The method described in non-Patent Document 1 requires two steps of reduction melting treatment and chloride volatilization treatment. Therefore, there are burden and time for such treatments.

As mentioned, all of the conventional techniques are unsatisfactory. Therefore, an efficient and low-cost method for separating lead from funnel glass has been desired.

In addition, in addition to the funnel glass, there are many waste glasses containing various heavy metals. Therefore, a method for separating heavy metals from such waste glass has been desired.

The present invention has been made in view of such circumstances, and the object of the present invention is to provide an efficient and low-cost method for separating heavy metals from glass.

## MEANS FOR SOLVING THE PROBLEMS

According to the present invention, a method for separating a heavy metal from glass, comprising the steps of: calcinating a glass powder containing the heavy metal at 900 to 1400°C in the presence of a chlorinating agent to separate the heavy metal by volatilizing the heavy metal as a chloride; wherein the calcination is conducted in the presence of a hydroxide, is provided.

Conventionally, lead was separated from glass generally by converting lead into a chloride using a chlorinating agent such as $CaCl_2$, followed by volatilization to separate glass and lead. When such method is used, the residual lead concentration in the glass can be reduced to approximately 600 mg/kg (0.06%). However, since the standard of lead content in glass to be disposed by landfill is regulated as 150 mg/kg or lower by the Soil Contamination Countermeasures Act, it was necessary to further decrease the residual lead concentration of glass. In such circumstances, the inventors have conducted research to further decrease the residual lead concentration, and found that when calcination of the lead-glass is carried out in the presence of a chlorinating agent and a hydroxide, the residual lead concentration can be dramatically reduced. In addition, it was also found that such phenomena was not limited to lead, and were seen in other heavy metals capable of chloride volatilization, thereby leading to completion of the present invention.

The theory for the dramatic reduction in residual concentration of heavy metal is currently under research, and is not fully revealed. Here, it is presumed that the hydroxide traps the chlorine atom released from the chlorinating agent, and promotes the reaction between the chlorine atom and the heavy metal atom. From such effect, the amount of chlorine released in the reacting furnace can be reduced, and thus corrosion of the furnace can be suppressed and the chlorine concentration of the gas exhausted from the reacting furnace can be reduced.

## BRIF DESCRIPTION OF THE DRAWINGS

FIGs. 1(a) to 1(d) are graphs showing the combined effect of a chlorinating agent and a hydroxide, when the chlorinating agent is polyvinyl chloride (PVC).

FIG. 2 is a graph showing a relation between the calcination temperature and the Pb volatilization rate, when the chlorinating agent is PVC.

FIG. 3 is a graph showing a relation between the calcination period and the Pb volatilization rate, when the chlorinating agent is PVC.

FIG. 4 is a graph showing a relation between the grain size of glass and the Pb volatilization rate, when the chlorinating agent is PVC.

FIGs. 5(a) to 5(c) are graphs showing the combined effect of a chlorinating agent and a hydroxide, when the chlorinating agent is $CaCl_2$.

FIGs. 6(a) to 6(c) are graphs showing the influence of the addition amount of the hydroxide on the Pb volatilization rate, when the chlorinating agent is $CaCl_2$.

FIG. 7 is a graph showing the combined effect of a chlorinating agent and a hydroxide, when the chlorinating agent is PVC and the heavy metal is varied.

## DESCRIPTION OF THE PREFERRED EMBODIMENTS

Hereinafter, the embodiment of the present invention will be described.

According to one embodiment of the present invention, a method for separating a heavy metal from glass, comprises the steps of: calcinating a glass powder containing the heavy metal at 900 to 1400°C in the presence of a chlorinating agent to separate the heavy metal by volatilizing the heavy metal as a chloride; wherein the calcination is conducted in the presence of a hydroxide.

Hereinafter, each of the steps will be described in detail.

1. Glass Powder Containing Heavy Metal

The glass powder containing heavy metal can be prepared by crushing the glass containing heavy metal using a ball mill, commercially available vibrating mill, and the like. There is no particular limitation regarding the grain size of the glass powder. When the grain size is too large, it becomes difficult to chlorinate the heavy metal (the term "chlorinate" refers to conversion of a substance into a chloride), and thus the effect of removing the heavy metal decreases. Accordingly, it is preferable that the grain size is small. Here, the glass powder preferably contains particles having a grain size of smaller than 125 $\mu$m by 50 mass% (preferably, 60, 70, 80, 90, 95, or 99 mass%) or more, and more preferably contains particles having a grain size of smaller than 45 $\mu$m by 50 mass% (preferably, 60, 70, 80, 90, 95, or 99 mass%) or more. In the present specification, the phrase "having a grain size of smaller than X pm" means that the particles can go through a sieve having X $\mu$m mesh. The phrase "particles having a grain size of smaller than X $\mu$m by Y mass% or more" means that Y mass% or more of the glass powder can go through the sieve having X $\mu$m mesh. Even when particles that cannot go through the sieve having X $\mu$m mesh is contained by a small amount, the chloride volatilization reaction of the heavy metal proceeds well with such particles if Y mass% or more of the particles have a grain size of smaller than X $\mu$m, and thus the heavy metal can be separated. Here, when particles with large grain size are intermingling, the volatilization rate of the heavy metals would decrease for such intermingling. Therefore, in order to improve the overall heavy metal volatilization rate, it is preferable that all of the particles have a grain size of smaller than X $\mu$m.

The present embodiment mainly focuses on a funnel glass of the CRT, containing heavy metals, described in the Background Art. The object of the present embodiment is to collect metallic lead from this funnel glass, and to detoxify the funnel glass. Here, the present embodiment is intended not only for the funnel glass, but also the lead-glasses of other origin and type. In addition, the present embodiment is intended not only for lead, but also various heavy metals. It is necessary to separate such heavy metals from the viewpoint of preventing environmental pollution, securing of resources, and the like. The present embodiment intends to collect heavy metals which exist in the glass as an oxide, and can separate the heavy metals from the glass by chloride volatilization. In the present specification, "heavy metal" includes typical heavy metals such as Pb, Co, Cu, Mn, Ni, Zn, In, Cd, As, Se, Fe, and Cr; metals categorized as rare metals such as Ti, Ag, and Au; and other metals having a relatively large atomic weight (for example, the atomic weight is 45 to 250, and specific examples are 45, 50, 60, 70, 80, 90, 100, 110, 120, 130, 140, 150, 160, 170, 180, 190, 200, and 250. The atomic weight may be within the range of the two values selected from these exemplified values.) such as Cs. That is, the heavy metal is at least one metal selected from the group consisting of Pb, Co, Cu, Mn, Ni, Zn, In, Cd, As, Se, Fe, Cr, Ti, Ag, Au, and Cs. Heavy metals other than these, rare metals, and other metals can be applied with the method of the present embodiment so long as it can be separated by the chloride volatilization. Here, the present invention is focused on glass, however, the method of the present invention has a possibility for being applied for collecting rare metals from the circuit boards loaded with condensers and coils, or for detoxifying incineration fly ash.

The content of silica ($SiO_2$) in the glass is not particularly limited, and is 30 to 99 mass% for example. Specifically, for example, the content is 30, 35, 40, 45, 50, 55, 60, 65, 70, 75, 80, 85, 90, 95, or 99 mass%. The content may be within the range of the two values selected from these exemplified values. The content of the heavy metal in the glass by oxide conversion (when the heavy metal is lead, by PbO) is, for example, 0.02 to 50 mass%. Specifically, for example, the content is 0.02, 0.05, 0.1, 0.5, 1, 5, 10, 15, 20, 25, 30, 40, or 50 mass%. The content may be within the range of the two values selected from these exemplified values.


2. Chlorinating Agent


There is no limitation regarding the chlorinating agent used in the present embodiment, so long as it can chlorinate the heavy metal in glass. Here, from the viewpoint of cost and availability, chlorine-containing organic polymer and calcium chloride ($CaCl_2$) are especially preferable. Chlorine-containing organic polymer is an organic polymer containing chlorine atom, and polyvinylidene chloride and polyvinyl chloride can be mentioned for example. Chlorine-containing organic polymer can be a source of dioxin if treated inappropriately, and thus its disposal is difficult. Here, in the method of the present embodiment, by using the waste chlorine-containing organic polymer as the chlorinating agent, it can be effectively used for separating heavy metals from glass. In addition, calcium chloride can be obtained inexpensively since it is filled in a fluid balancer of a drum type washing machine in the form of an aqueous solution, and is discarded with the washing machine. Further, residual heavy metal concentration can be decreased by using calcium chloride and optimizing the amount of hydroxide added, compared with the case where the chlorine-containing organic polymer is used. Therefore, it is preferable to use calcium chloride as the chlorinating agent.

There is no particular limitation regarding the addition amount of the chlorinating agent. The chlorinating agent should be added in an amount necessary for fully chlorinating the heavy metal. Preferably, the chlorinating agent is added by an amount so that the molar ratio (chlorine atom / heavy metal atom) of the chlorine atom in the chlorinating agent and the heavy metal to be chlorinated is 3 or more. When this molar ratio is too small, chlorination of the heavy metal becomes insufficient and thus the volatilization rate of the heavy metal decreases. Here, the molar ratio is more preferably 5 or more, 6 or more, 8 or more, or 10 or more. In such cases, the volatilization rate is improved. Upper limit of the molar ratio is not particularly provided. Here, since excess amount of the chlorinating agent is not expected to further increase the volatilization rate, the upper limit is 30 or less, 20 or less, or 15 or less, for example.

3. Hydroxide

There is no particular limitation regarding the type of the hydroxide which is added together with the chlorinating agent, so long as it can improve the volatilization rate of the heavy metal in the glass. The hydroxide is, for example, hydroxide of alkali metal or alkali earth metal; and metal hydroxide such as aluminum hydroxide. Example of the hydroxide of alkali metal is sodium hydroxide and potassium hydroxide. Example of the hydroxide of alkali earth metal is calcium hydroxide and magnesium hydroxide. Among these hydroxides, calcium hydroxide is preferable since its effect to improve the volatilization rate of the heavy metal in the glass is especially high.

There is no particular limitation regarding the addition amount of the hydroxide, so long as it is an amount necessary for improving the volatilization rate of the heavy metal in the glass. Preferably, the hydroxide is added by an amount so that the molar ratio (chlorine atom / heavy metal atom) of the hydroxyl group in the hydroxide and the chlorine atom in the chlorinating agent is 0.1 to 20. The effect of improving the volatilization rate of the heavy metal by adding the hydroxide cannot be sufficiently obtained for either case of too small addition amount nor excessive addition amount of the hydroxide. The optimal value of the molar ratio differs depending on the chlorinating agent used. When the chlorinating agent is polyvinyl chloride, the molar ratio (hydroxyl group / chlorine atom) is preferably 0.5 to 4, more preferably 1 to 2, and further more preferably 1.25 to 1.75. Examples of a particular molar ratio are 0.5, 1, 1.25, 1.3, 1.35, 1.4, 1.45, 1.5, 1.55, 1.6, 1.65, 1.7, 1.75, 2, 2.5, 3, 3.5, and 4. The molar ratio may be within the range of the two values selected from these exemplified values. On the other hand, when the chlorinating agent is calcium chloride, the molar ratio (hydroxyl group / chlorine atom) is preferably 0.1 to 1, more preferably 0.15 to 0.65. Examples of a particular molar ratio are 0.1, 0.15, 0.2, 0.25, 0.3, 0.35, 0.4, 0.45, 0.5, 0.55, 0.6, 0.65, 0.7, 0.8, 0.9, and 1. The molar ratio may be within the range of the two values selected from these exemplified values. When the molar ratio is such, the volatilization rate of the heavy metal becomes high, and thus the residual heavy metal concentration decreases.

4. Calcination

The glass powder containing heavy metal is calcined in the presence of the chlorinating agent and the hydroxide at 900 to 1400°C. When the calcination temperature is too low, the chlorinated heavy metal cannot be fully volatilized, resulting in decrease in the volatilization rate of the heavy metal. On the other hand, when the calcination temperature is too high, the glass powder would melt before the heavy metal in the glass is chlorinated, and thus chlorination reaction of the heavy metal would not proceed. In an alternative expression, the calcination temperature is the volatilization temperature of the heavy metal chloride or higher, and is the melting temperature of the glass powder or lower. Examples of a particular calcination temperature are 900, 950, 1000, 1050, 1100, 1150, 1200, 1250, 1300, 1350, and 1400°C. The calcination temperature may be within the range of the two values selected from these exemplified values.

The longer the calcination period is, the more the reaction proceeds and the volatilization rate of the heavy metal tends to improve. According to the following Experiments, 10 minutes of calcination achieved a volatilization rate of the heavy metal (Pb) of 99%. Therefore, short period of calcination can volatize and remove the heavy metal. Here, since elongation of the calcination period to more than 120 minutes is not expected to further increase the volatilization rate, the calcination period is preferably 10 to 120 minutes. The calcination period can be arbitrarily adjusted depending on the type of the heavy metal to be removed, calcination temperature, and the volatilization rate to be achieved.

5. Glass After Chloride Volatilization, and Heavy Metal Chloride

The glass after the chloride volatilization is detoxified, and thus it can be disposed by landfill as it is, or can be used as construction materials and the like. In addition, the heavy metal chloride which have been subjected to chloride volatilization can be collected by cooling, a bag filter, or a cyclone type dust collector. The collected heavy metal chloride can be used as the smelting raw material.

**EXAMPLES**

Hereinafter, the Examples of the present invention will be described.

1. Verification of Combined Effect of Chlorinating Agent and Hydroxide

1-1. Experimental Method

Glass powder having a grain size of smaller than 45pm was obtained by crushing the lead-glass (funnel of a cathode ray tube), followed by allowing the crushed glass to go through a sieve having 45 $\mu$m mesh.

Subsequently, lead-glass (0.4 g), chlorinating agent (PVC), and Ca(OH)$_2$ were weighed by a predetermined weight, and were mixed in an agate mortar. The mixture thus obtained was placed in an alumina crucible.

The crucible was placed in an electric furnace heated to a predetermined temperature. Subsequently, the furnace was heated at 1100°C for 2 hours with an air stream of 0.4 L/min. Accordingly, lead was subjected to chloride volatilization.

After the crucible was taken out to a room temperature environment and was cooled down, the crucible was placed in a 100 mL plastic container. An mixed acid of hydrofluoric acid (10 mL) and nitric acid (10 mL) diluted by purified water to 100 mL was added to the container. Then, the container was tightly closed, followed by irradiation with ultrasonic waves for 2 hours using an ultrasonic cleaner. Accordingly, the glass was decomposed. The solution containing the decomposed glass was placed in a 500 mL measuring flask, and then the crucible and the container for decomposition were rinsed with nitric acid (15 mL), followed by dilution with purified water to 500 mL.

Content of Pb was analyzed using ICP-MS, and the volatilization rate of Pb was calculated from the following equation.

$$\texttt{volatilization rate of Pb (\%) = (B-A) / B x 100}$$

A: residual amount in residual glass (mg)
B: content of Pb in lead-glass (mg)

1-2. Results of Experiments

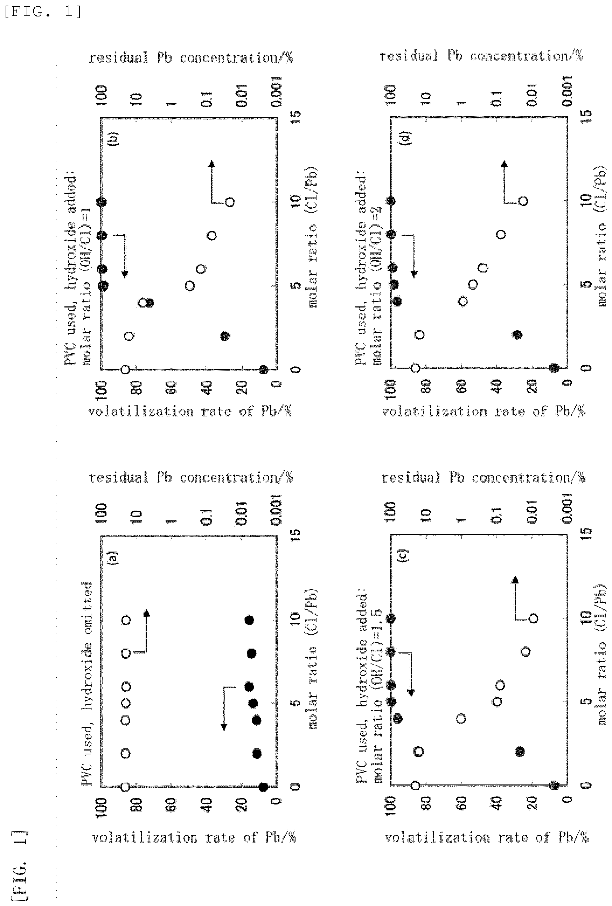

The results of Experiments obtained are shown in FIGs 1(a) to 1(d).

FIG. 1(a) is a graph showing the volatilization rate of Pb and the concentration of residual Pb, when the molar ratio (Cl/Pb) was varied while using PVC as the chlorinating agent and the addition of hydroxide was omitted. As can be seen from the graph, the volatilization rate of Pb was not be improved even when the molar ratio (Cl/Pb) was increased. In addition, it became apparent that chloride volatilization of Pb does not proceed efficiently when PVC was only added.

FIG. 1(b) is a graph obtained by conducting an Experiment in a similar condition as FIG. 1(a), except that slaked lime (Ca(OH)$_2$) as the hydroxide was added so that the molar ratio (OH/Cl) would be 1. As can be seen from the graph, when the hydroxide was added, the volatilization rate of Pb was improved by increasing the molar ratio (Cl/Pb). As a result, the residual Pb concentration when the molar ratio (Cl/Pb) was 10 was as low as 0.021% (210 mg/kg).

FIG. 1(c) is a graph obtained by conducting an Experiment in a similar condition as FIG. 1(b) except that the molar ratio (OH/Cl) was altered to 1.5. As can be seen from the graph, an extremely low value of the residual Pb concentration as 0.009% (90 mg/kg) was achieved when the molar ratio (Cl/Pb) was 10, by altering the molar ratio (OH/Cl) to 1.5.

FIG. 1(d) is a graph obtained by conducting an Experiment in a similar condition as FIG. 1(c), except that the molar ratio (OH/Cl) was altered to 2. As can be seen from the graph, the value of the residual Pb concentration became higher than FIG. 1(c) as 0.018% (180 mg/kg) when the molar ratio (Cl/Pb) was 10, by altering the molar ratio (OH/Cl) to 2.

From the afore-mentioned results, the following can be concluded.

When only PVC was used as the chlorinating agent, the volatilization rate of Pb was extremely low, however, the addition of the hydroxide dramatically improved the volatilization rate of Pb.

When PVC and hydroxide were used in combination, extremely low value of the residual Pb concentration as 0.009% (90 mg/kg) was achieved by adjusting the addition amount of PVC and hydroxide. The content regulated by the Soil Contamination Countermeasures Act is 150 mg/kg or lower, and thus the standard was met.

2. Effect of Calcination Temperature Regarding Volatilization Rate of Pb

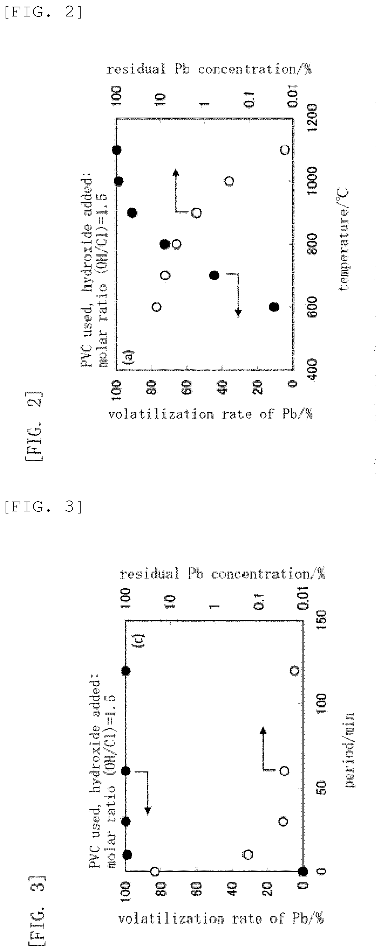

Next, in order to study the effect of calcination temperature regarding volatilization rate of Pb, similar Experiments as "1-1. Experimental Method" were carried out except that the molar ratio (Cl/Pb) was fixed to 8, the molar ratio (OH/Cl) was fixed to 1.5, and the calcination temperature was varied. The results are shown in FIG. 2. As shown in FIG. 2, the higher the calcination temperature, the higher the volatilization rate of Pb. When the calcination temperature was 900°C, the volatilization rate of Pb exceeded 90%, and when the calcination temperature was 1100°C, the volatilization rate of Pb reached 99.93%.

3. Effect of Calcination Period Regarding Volatilization Rate of Pb

Next, in order to study the effect of calcination period regarding volatilization rate of Pb, similar Experiments as "1-1. Experimental Method" were carried out except that the molar ratio (Cl/Pb) was fixed to 8, the molar ratio (OH/Cl) was fixed to 1.5, and the calcination period was varied. The results are shown in FIG. 3. As shown in FIG. 3, only 10 minutes of calcination period achieved the volatilization rate of Pb as 99.0%, 30 minutes of calcination period achieved the volatilization rate of Pb as 99.86%, and 120 minutes of calcination period achieved the volatilization rate of Pb as 99.93%.

4. Effect of Grain Size of Glass Powder Regarding Volatilization Rate of Pb

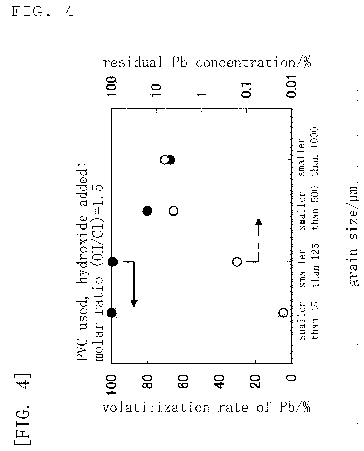

Next, in order to study the effect of the grain size of the glass powder regarding volatilization rate of Pb, similar Experiments as "1-1. Experimental Method" were carried out except that the molar ratio (Cl/Pb) was fixed to 8, the molar ratio (OH/Cl) was fixed to 1.5, and the grain size of the glass powder was varied. The results are shown in FIG. 4. As shown in FIG. 4, when the grain size is smaller than 500 $\mu$m, the volatilization rate of Pb was 80%, when the grain size was smaller than 125 $\mu$m, the volatilization rate of Pb was 99.3%, and when the grain size was smaller than 45 $\mu$m, the volatilization rate of Pb was 99.93%.

5. Combined Effect of Chlorinating Agent and Hydroxide When $CaCl_2$ is Used as Chlorinating Agent

Next, in order to study the combined effect of chlorinating agent and hydroxide when $CaCl_2$ is used as chlorinating agent, similar Experiments as "1-1. Experimental Method" were carried out except that $CaCl_2$ was used as the chlorinating agent. Here, $Ca(OH)_2$ was added as the hydroxide so that the molar ratio (OH/Cl) would be 0.5.

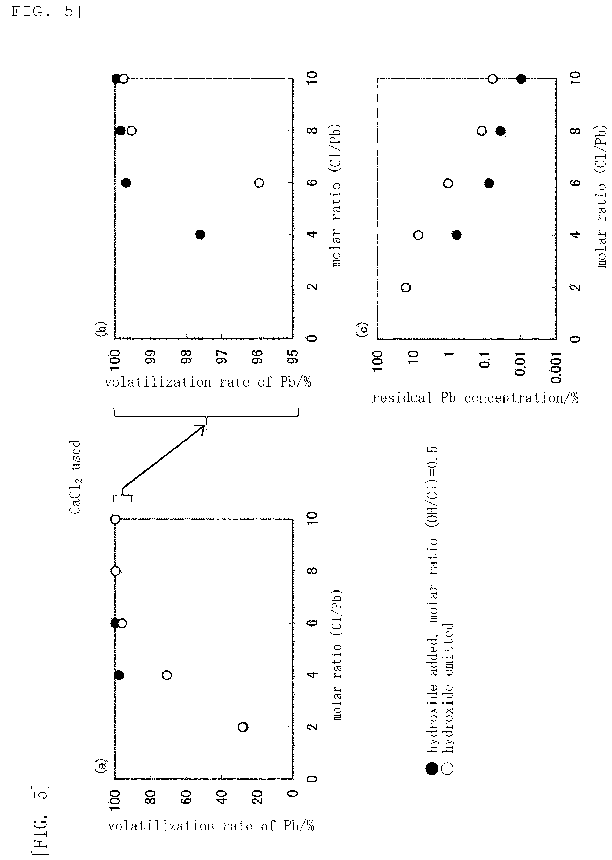

The results are shown in FIGs. 5(a) to 5(c). FIG. 5(a) shows the variation in the volatilization rate of Pb when the molar ratio (Cl/Pb) was varied. FIG. 5(b) shows an enlarged graph of FIG. 5(a), regarding the portion of 95 to 100% in the vertical axis. FIG. 5(c) is a graph showing the variation in the residual Pb concentration when the molar ratio (Cl/Pb) was varied. In FIGs. 5(a) to 5(c), ○ represents a case where hydroxide was not used, and • represents a case where hydroxide was used. Therefore, the alteration from ○ to • shows the combined effect of the chlorinating agent and hydroxide.

Referring to FIG. 5(a), where the molar ratio (Cl/Pb) was 4, volatilization rate of Pb was 70.8% when hydroxide was not used, and volatilization rate of Pb increased dramatically to 97.6% when hydroxide was used. This result shows that the amount of chlorinating agent can be suppressed if hydroxide is used.

Next, referring to FIGs. 5(b) to 5(c), it can be seen that volatilization rate of Pb was increased by using hydroxide, regardless of the molar ratio (Cl/Pb). Accordingly, the residual Pb concentration was reduced. For example, when the molar ratio (Cl/Pb) is 10, the residual Pb concentration was 0.059% (590 mg/kg) when hydroxide was not used. On the other hand, the residual Pb concentration was decreased to 0.0093% (93 mg/kg) when hydroxide was used. Taking into consideration that the standard of lead content is 150 mg/kg or lower according to the Soil Contamination Countermeasures Act, decrease in the residual Pb concentration of glass from 590 mg/kg to 93 mg/kg has a significant technical meaning.

6. Effect of Addition Amount of Hydroxide Regarding Volatilization Rate of Pb When Chlorinating Agent is $CaCl_2$

Next, in order to study the effect of addition amount of hydroxide regarding volatilization rate of Pb when chlorinating agent is $CaCl_2$, similar Experiments as "1-1. Experimental Method" were carried out except that $CaCl_2$ was used as the chlorinating agent, molar ratio (Cl/Pb) was fixed to 4 or 8, and the molar ratio (OH/Cl) was varied.

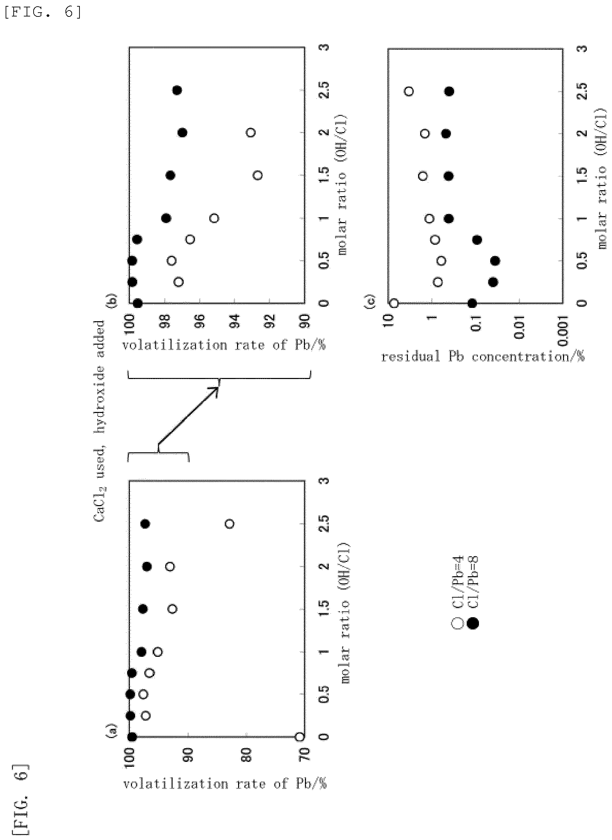

The results are shown in FIGs. 6(a) to 6(c). FIG. 6(a) is a graph showing the variation in the volatilization rate of Pb when the molar ratio (OH/Cl) was varied. FIG. 6(b) shows an enlarged graph of FIG. 6(a), regarding the portion of 90 to 100% in the vertical axis. FIG. 6(c) is a graph showing the variation in the residual Pb concentration when the molar ratio (OH/Cl) was varied. In FIGs. 6(a) to 6(c), ○ represents a case where the molar ratio (Cl/Pb) was 4, and • represents a case where the molar ratio (Cl/Pb) was 8.

Referring to FIGs. 6(a) to 6(c), where the molar ratio (Cl/Pb) was 4, the volatilization rate of Pb was extremely low (approximately 70%) when hydroxide was not added, and the volatilization rate of Pb increased dramatically when a minute amount of hydroxide was added. On the other hand, where the molar ratio (Cl/Pb) was 8, the volatilization rate of Pb was significantly high as 99.5% even when hydroxide was not added. In addition, when a minute amount of hydroxide was added by a molar ratio (OH/Cl) of approximately 0.15 to 0.65, the volatilization rate of Pb was further improved, and the residual Pb concentration was further decreased.

Further, it became apparent that the volatilization rate of Pb was decreased and the residual Pb concentration was increased when hydroxide was added excessively.

7. Effect of Type of Hydroxide Regarding Volatilization Rate of Pb

Next, in order to study the effect of the type of hydroxide regarding volatilization rate of Pb, similar Experiments as "1-1. Experimental Method" were carried out except that $CaCl_2$ was used as the chlorinating agent, molar ratio (Cl/Pb) was fixed to 10, molar ratio (OH/Cl) was fixed to 0.5, and the type of hydroxide was varied.

The results are shown in Table 1. As shown in Table 1, the usage of either one of the three types of hydroxides increased the volatilization rate of Pb and decreased the residual Pb concentration, compared with the case where hydroxide was not used. In addition, when a hydroxide of alkali earth metal (calcium hydroxide or magnesium hydroxide) was used, the increase in the volatilization rate of Pb and the decrease in the residual Pb concentration were especially large. Here, when calcium hydroxide was used, the increase in the volatilization rate of Pb and the decrease in the residual Pb concentration were the largest.

[Table 1]

| hydroxide | volatilization rate of Pb (%) | residual Pb concentration (mg/kg) |
|---|---|---|
| none | 99.75 | 600 |
| $Ca(OH)_2$ | 99.95 | 93 |
| $Mg(OH)_2$ | 99.91 | 180 |
| $Al(OH)_3$ | 99.85 | 310 |

8. Combined Effect of Chlorinating Agent and Hydroxide For Heavy Metals Other Than Pb

Next, regarding a case where various heavy metals other than Pb are separated by chloride volatilization, study was conducted to see whether there is an improvement in the volatilization rate by using hydroxide in combination.

First, $Bi_2O_3$, $Ta_2O_5$, $Nb_2O_5$, $Co_3O_4$, NiO, CuO, $MnO_2$, ZnO, $TiO_2$, and $In_2O_3$ were added to soda-lime glass by 1 wt%, followed by melting and mixing, thereby obtaining a model glass.

Secondly, the model glass was crushed and the crushed model glass was allowed to go through a sieve having 45 $\mu$m mesh. Accordingly, glass powder having a grain size of 45 $\mu$m or smaller was obtained.

Then, a chlorinating agent (PVC, 0.341 g) and $Ca(OH)_2$ (0.300 g) were added to the model glass (0.4 g), and the resultant was mixed in an agate mortar. The mixture thus obtained was placed in an alumina crucible.

The crucible was placed in an electric furnace heated to a predetermined temperature. Subsequently, the furnace was heated at 1100°C for 2 hours with an air stream of 0.4 L/min. Accordingly, the heavy metals were subjected to chloride volatilization.

Next, the volatilization rate of the various heavy metals were calculated by a similar method as "1-1. Experimental Method"

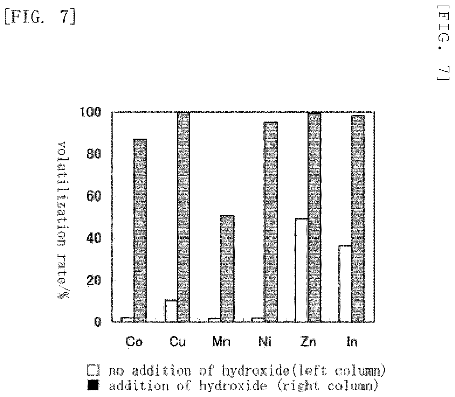

The results are shown in FIG. 7. Here, analysis was conducted for Co, Cu, Mn, Ni, Zn, and In. In each of the elements, the graph at the left side shows the result obtained for the case without the addition of hydroxide, and the graph at the right side shows the result obtained for the case with the addition of hydroxide. As apparent from these graphs, the volatilization rates of the various heavy metals were very low when hydroxide was not added. On the other hand, addition of hydroxide increased the volatilization rates dramatically.

Accordingly, it has been verified that the combined effect of chlorinating agent and hydroxide is effective for various heavy metals other than lead.

**Claims**

1. A method for separating a heavy metal from glass, comprising the steps of:

   calcinating a glass powder containing the heavy metal at 900 to 1400°C in the presence of a chlorinating agent to separate the heavy metal by volatilizing the heavy metal as a chloride; wherein the calcination is conducted in the presence of a hydroxide.

2. The method of Claim 1, wherein the chlorinating agent is a chlorine-containing organic polymer or calcium chloride.

3. The method of Claim 1 or 2, wherein the hydroxide is a hydroxide of alkali metal or alkali earth metal; or aluminum hydroxide.

4. The method of Claim 3, wherein the hydroxide is calcium hydroxide.

5. The method of any one of Claims 1 to 4, wherein the molar ratio (chlorine atom / heavy metal atom) of a chlorine atom in the chlorinating agent and the heavy metal to be chlorinated is 3 or more.

6. The method of Claim 5, wherein the molar ratio (chlorine atom / heavy metal atom) is 6 or more.

7. The method of any one of Claims 1 to 6, wherein a molar ratio (hydroxyl group / chlorine atom) of a hydroxyl group in the hydroxide and a chlorine atom in the chlorinating agent is 0.1 to 20.

8. The method of any one of Claims 1 to 6, wherein the chlorinating agent is polyvinyl chloride, and a molar ratio (hydroxyl group / chlorine atom) of a hydroxyl group in the hydroxide and a chlorine atom in the chlorinating agent is 0.5 to 4.

9. The method of Claim 8, wherein the molar ratio (hydroxyl group / chlorine atom) is 1.25 to 1.75.

10. The method of any one of Claims 1 to 7, wherein the chlorinating agent is calcium chloride, and a molar ratio (hydroxyl group / chlorine atom) of a hydroxyl group in the hydroxide and a chlorine atom in the chlorinating agent is 0.1 to 1.

11. The method of Claim 10, wherein the molar ratio (hydroxyl group / chlorine atom) is 0.15 to 0.65.

12. The method of any one of Claims 1 to 11, wherein the heavy metal is at least one type selected from the group consisting of Pb, Co, Cu, Mn, Ni, Zn, In, Cd, As, Se, Fe, Cr, Ti, Ag, Au, and Cs.

13. The method of any one of Claims 1 to 12, wherein the glass powder contains particles having a grain size of smaller than 125 $\mu$m by 50 mass% or more, preferably particles having a grain size of smaller than 45 $\mu$m by 50 mass% or more.

14. The method of any one of Claims 1 to 13, wherein a calcination temperature is 1000 to 1300°C.

15. The method of any one of Claims 1 to 14, wherein the glass is a funnel glass of a CRT.


**Patentansprüche**

1. Verfahren zur Abtrennung eines Schwermetalls aus Glas, umfassend die folgenden Schritte:

Kalzinieren eines das Schwermetall enthaltenden Glaspulvers bei 900 bis 1400 °C in Gegenwart eines Chlorierungsmittels zum Abtrennen des Schwermetalls durch Verdampfen des Schwermetalls als Chlorid; wobei die Kalzinierung in Gegenwart eines Hydroxids durchgeführt wird.

2. Verfahren nach Anspruch 1, wobei das Chlorierungsmittel ein chlorhaltiges organisches Polymer oder Calciumchlorid ist.

3. Verfahren nach Anspruch 1 oder 2, wobei das Hydroxid ein Hydroxid eines Alkalimetalls oder ein Hydroxid eines Erdalkalimetalls; oder Aluminiumhydroxid ist.

4. Verfahren nach Anspruch 3, wobei das Hydroxid Calciumhydroxid ist.

5. Verfahren nach einem der Ansprüche 1 bis 4, wobei das Molverhältnis (Chloratom/Schwermetallatom) eines Chloratoms in dem Chlorierungsmittel und des zu chlorierenden Schwermetalls 3 oder mehr beträgt.

6. Verfahren nach Anspruch 5, wobei das Molverhältnis (Chloratom/Schwermetallatom) 6 oder mehr beträgt.

7. Verfahren nach einem der Ansprüche 1 bis 6, wobei ein Molverhältnis (Hydroxylgruppe/Chloratom) einer Hydroxylgruppe in dem Hydroxid und eines Chloratoms in dem Chlorierungsmittel 0,1 bis 20 beträgt.

8. Verfahren nach einem der Ansprüche 1 bis 6, wobei das Chlorierungsmittel Polyvinylchlorid ist, und ein Molverhältnis (Hydroxylgruppe/Chloratom) einer Hydroxylgruppe in dem Hydroxid und eines Chloratoms in dem Chlorierungsmittel 0,5 bis 4 beträgt.

**9.** Verfahren nach Anspruch 8, wobei das Molverhältnis (Hydroxylgruppe/Chloratom) 1,25 bis 1,75 beträgt.

**10.** Verfahren nach einem der Ansprüche 1 bis 7, wobei das Chlorierungsmittel Calciumchlorid ist, und ein Molverhältnis (Hydroxylgruppe/Chloratom) einer Hydroxylgruppe in dem Hydroxid und eines Chloratoms in dem Chlorierungsmittel 0,1 bis 1 beträgt.

**11.** Verfahren nach Anspruch 10, wobei das Molverhältnis (Hydroxylgruppe/Chloratom) 0,15 bis 0,65 beträgt.

**12.** Verfahren nach einem der Ansprüche 1 bis 11, wobei das Schwermetall mindestens eine Art, ausgewählt aus der Gruppe bestehend aus Pb, Co, Cu, Mn, Ni, Zn, In, Cd, As, Se, Fe, Cr, Ti, Ag, Au und Cs, ist.

**13.** Verfahren nach einem der Ansprüche 1 bis 12, wobei das Glaspulver Partikel mit einer Korngröße kleiner als 125 $\mu$m zu 50 Masse-% oder mehr, vorzugsweise Partikel mit einer Korngröße kleiner als 45 $\mu$m zu 50 Masse-% oder mehr enthält.

**14.** Verfahren nach einem der Ansprüche 1 bis 13, wobei eine Kalzinierungstemperatur 1000 bis 1300 °C beträgt.

**15.** Verfahren nach einem der Ansprüche 1 bis 14, wobei das Glas ein Trichterglas einer CRT ist.

**Revendications**

**1.** Procédé de séparation d'un métal lourd de verre, comprenant les étapes de :

calciner une poudre de verre contenant le métal lourd à 900 °C jusqu'à 1 400 °C, en présence d'un agent de chloration pour séparer le métal lourd en volatilisant le métal lourd en tant que chlorure ;
la calcination étant effectuée en présence d'un hydroxyde.

**2.** Procédé selon la revendication 1, l'agent de chloration étant un polymère organique contenant du chlore ou du chlorure de calcium.

**3.** Procédé selon la revendication 1 ou 2, l'hydroxyde étant un hydroxyde de métal alcalin ou un hydroxyde de métal alcalino-terreux ; ou de l'hydroxyde d'aluminium.

**4.** Procédé selon la revendication 3, l'hydroxyde étant de l'hydroxyde de calcium.

**5.** Procédé selon l'une quelconque des revendications 1 à 4, le rapport molaire (atome de chlore/atome de métal lourd) d'un atome de chlore dans l'agent de chloration et du métal lourd devant être chloré étant de 3 ou plus.

**6.** Procédé selon la revendication 5, le rapport molaire (atome de chlore/atome de métal lourd) étant de 6 ou plus.

**7.** Procédé selon l'une quelconque des revendications 1 à 6, le rapport molaire (groupe hydroxyle/atome de chlore) d'un groupe hydroxyle dans l'hydroxyde et d'un atome de chlore dans l'agent de chloration étant de 0,1 à 20.

**8.** Procédé selon l'une quelconque des revendications 1 à 6, l'agent de chloration étant du chlorure de polyvinyle, et un rapport molaire (groupe hydroxyle/atome de chlore) d'un groupe hydroxyle dans l'hydroxyde et d'un atome de chlore dans l'agent de chloration étant de 0,5 à 4.

**9.** Procédé selon la revendication 8, le rapport molaire (groupe hydroxyle/atome de chlore) étant de 1,25 à 1,75.

**10.** Procédé selon l'une quelconque des revendications 1 à 7, l'agent de chloration étant du chlorure de calcium, et un rapport molaire (groupe hydroxyle/atome de chlore) d'un groupe hydroxyle dans l'hydroxyde et d'un atome de chlore dans l'agent de chloration étant de 0,1 à 1.

**11.** Procédé selon la revendication 10, le rapport molaire (groupe hydroxyle/atome de chlore) étant de 0,15 à 0,65.

**12.** Procédé selon l'une quelconque des revendications 1 à 11, le métal lourd étant au moins un type sélectionné parmi le groupe se composant de : Pb, Co, Cu, Mn, Ni, Zn, In, Cd, As, Se, Fe, Cr, Ti, Ag, Au et Cs.

**13.** Procédé selon l'une quelconque des revendications 1 à 12, la poudre de verre contenant des particules ayant une grosseur de grain inférieure à 125 $\mu$m par 50 % massique ou plus, de préférence des particules ayant une grosseur de grain inférieure à 45 $\mu$m par 50 % massique ou plus.

**14.** Procédé selon l'une quelconque des revendications 1 à 13, une température de calcination étant 1 000 °C à 1 300 °C.

**15.** Procédé selon l'une quelconque des revendications 1 à 14, le verre étant un verre d'entonnoir d'un tube cathodique (CRT).

[FIG. 1]

[FIG. 1]

[FIG. 2]

[FIG. 2]

[FIG. 3]

[FIG. 3]

[FIG. 4]

[FIG. 4]

[FIG. 5]

[FIG. 6]

[FIG. 6]

[FIG. 7]

[FIG. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 7096264 A

• WO 2003024879 A

**Non-patent literature cited in the description**

• *Environmental Issue and Recycling Technology of Glass Lead Recovery from Waste CRT Glass by Reduction Melting/Chloride Volatilization Hybrid Method (Ceramics Japan : Bulletin of the Ceramic Society of Japan,* February 2012, vol. 47 (2), 96-100